(19) Europäisches Patentamt
European Patent Office
Office européen des brevets

(11) **EP 1 818 628 A2**

(12) **EUROPÄISCHE PATENTANMELDUNG**

(43) Veröffentlichungstag:
**15.08.2007 Patentblatt 2007/33**

(51) Int Cl.:
***F25B 9/14*** *(2006.01)*

(21) Anmeldenummer: **07001815.5**

(22) Anmeldetag: **27.01.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **11.02.2006 DE 102006006326**

(71) Anmelder: **Bruker BioSpin AG**
**8117 Fällanden (CH)**

(72) Erfinder:
• **Schauwecker, Robert**
**8004 Zürich (CH)**
• **Bösel, Johannes**
**6345 Neuheim (CH)**

(74) Vertreter: **Kohler Schmid Möbus**
**Patentanwälte**
**Ruppmannstrasse 27**
**70565 Stuttgart (DE)**

(54) **Hybrid-Wärmepumpe/Kältemaschine mit magnetischer Kühlstufe**

(57) Eine Vorrichtung zum Transport von Wärme von einem kalten Reservoir zu einem warmen Reservoir, in welcher zwei zyklische Prozesse zum Wärmetransport unter Arbeitsaufnahme ablaufen, wovon einer ein regenerativer zyklischer Prozess und einer ein magnetokalorischer zyklischer Prozess ist, wobei für den regenerativen zyklischen Prozess ein Arbeitsfluid und ein Wärmespeichermedium vorgesehen sind, ist dadurch gekennzeichnet, dass das Wärmespeichermedium des regenerativen zyklischen Prozesses ein magnetokalorisches Material für den magnetokalorischen zyklischen Prozess umfasst, wobei sich das magnetokalorische Material in einem Regeneratorbereich mit einem kalten Ende und mit einem warmen Ende befindet, und dass das Arbeitsfluid des regenerativen zyklischen Prozesses zusätzlich als Wärmeträgermedium für den magnetokalorischen zyklischen Prozess dient. Hierdurch ergibt sich eine kompakte, vom apparativen Aufwand einfache Vorrichtung, wobei sowohl die Leistungsdichte als auch die Effizienz der Vorrichtung gesteigert wird. Die Vorrichtung lässt sich vorzugsweise zur Kühlung einer supraleitenden Magnetanordnung einsetzten.

**Fig. 1c**

EP 1 818 628 A2

**Beschreibung**

Die Erfindung betrifft eine Vorrichtung zum Transport von Wärme von einem kalten Reservoir zu einem warmen Reservoir, in welcher mindestens zwei zyklische Prozesse zum Wärmetransport unter Arbeitsaufnahme ablaufen, wovon mindestens einer ein regenerativer zyklischer Prozess und mindestens einer ein magnetokalorischer zyklischer Prozess ist, wobei für den regenerativen zyklischen Prozess ein Arbeitsfluid und ein Wärmespeichermedium vorgesehen sind.

Eine solche Vorrichtung ist bereits aus der Druckschrift "A multi-stage continuousduty adiabatic demagnetization refrigerator" (P.J. Shirron, et.al., Adv. Cry. Eng., Vol. 45B, S. 1629) bekannt. Hierbei wird ein regenerativer zyklischer Gaskälteprozess mit einer magnetischen Kühlung kombiniert, indem eine Gifford-McMahon-Gaskältemaschine zur Vorkühlung von mehreren, in Serie geschalteten magnetischen Kältestufen verwendet wird, um extrem tiefe Temperaturen im mK-Bereich zu ermöglichen.

Eine weitere Vorrichtung ist aus der Druckschrift "Performance testing of a 4 K active magnetic regenerative refrigerator" (S.F. Kral et. al., Adv. Cry. Eng., Vol. 45A, S. 329) bekannt. In dieser Anordnung wird zur Erzeugung von Temperaturen im Bereich von 4 K vorgeschlagen, einen Gifford-McMahon-Kühler mit einer separaten magnetischen Kühlstufe zu kombinieren. Der Gifford-McMahon-Kühler kühlt dabei die magnetische Kühlstufe auf etwa 10 K vor.

Eine weitere derartige Vorrichtung wird in der Druckschrift "Prospects of magnetic liquefaction of hydrogen" (Barclay, J.A, Le froid sans frontières, vol. 1, S. 297, 1991) beschrieben. Hierbei wird eine magnetische Kühlstufe zur Verflüssigung von Wasserstoff (bei 20 K) propagiert. Gewöhnlich arbeitet die magnetische Kühlstufe allerdings nicht zwischen Raumtemperatur und 20 K, sondern z.B. zwischen etwa 80 K und 20 K. Die Vorkühlung der magnetischen Stufe auf etwa 80 K kann entweder über flüssigen Stickstoff oder eine Kältemaschine, zum Beispiel eine regenerative Gaskältemaschine, erfolgen. Das aktive Regeneratorbett der magnetischen Kühlstufe besteht dabei aus mehreren ferromagnetischen Materialien, die verschiedene magnetische Übergangstemperaturen (Curie-Temperatur) haben und von höchster zu tiefster Curie-Temperatur nebeneinander geschichtet werden.

Allen Beispielen ist gemeinsam, dass die Vorkühlung der magnetischen Kältestufe entweder über eine Gaskältemaschine, wie Stirling-, Pulsrohr- oder Gifford-McMahon-Kühler, oder flüssigen Stickstoff erfolgt. Die Gaskältemaschinen sind oft mehrstufig aufgebaut. In jeder Stufe wird dabei ein Gaskälteprozess durchlaufen, der sich in mehrere Prozessphasen, wie Kompression, Wärmeabgabe, Expansion und Wärmeaufnahme, gliedert. Zwischen der Kompressions- und der Expansionsphase wird in einer (passiven) Regeneratormatrix Wärme zwischengespeichert, so dass sich das Gas abkühlt. Nach der Expansion und Wärmezufuhr von außen (="Kälteabfuhr") wird die gespeicherte Wärme vom Gas wieder aufgenommen.

In der sich anschließenden magnetischen Kühlstufe ist nun nicht ein Gas das Arbeitsmedium, welches einen thermodynamischen Prozess durchläuft, sondern das magnetokalorische Material, ein Feststoff. Wärme wird zwischen dem magnetokalorischen Material und einer Wärmequelle bzw. Wärmesenke über eine zu- und abschaltbare thermische Verbindung (in Form eines thermischen Schalters) oder ein zusätzliches Wärmeträgermedium ausgetauscht. Eine Temperaturerhöhung und -absenkung im Prozess erfolgt durch Magnetisierung bzw. Entmagnetisierung des magnetokalorischen Materials, beispielsweise durch einen Permanentmagneten. Die Temperaturänderung ist dann am größten, wenn die mittlere Temperatur des Materials seiner Curie-Temperatur entspricht. Zur Überbrückung großer Temperaturunterschiede zwischen Wärmequelle und -senke können mehrere Materialien mit unterschiedlicher Curie-Temperatur verwendet werden, die schichtweise nebeneinander liegen und in Form einer Schüttung vorliegen. Mit Hilfe des Wärmeträgermediums durchläuft an jedem Ort im Regeneratorbett das dort vorhandene magnetokalorische Material einen eigenen Kreislauf zwischen verschiedenen

Temperaturen (aktive magnetische Regenerierung, engl. "active magnetic regeneration"). Die Koppelung nach außen findet an den Enden des Regeneratorbettes statt, wo das Wärmeträgermedium einen Wärmeübertrager durchströmt. Wärme wird somit letztlich von einer kalten Wärmequelle zu einer warmen Wärmesenke transportiert. Das magnetokalorische Material kann zyklisch in ein Magnetfeld eingebracht werden oder ein Magnetfeld periodisch zu- und abgeschaltet werden. Das Wärmeträgermedium (abhängig vom Anwendungsfall eine Flüssigkeit oder ein Gas) muss durch das magnetokalorische Material im richtigen Moment gefördert werden, z.B. mit einer Pumpe.

Als Einsatzgebiet von derartigen Vorrichtungen zum Transport von Wärme von einem kalten Reservoir zu einem warmen Reservoir, in welcher mindestens zwei zyklische Prozesse zum Wärmetransport unter Arbeitsaufnahme (ein Gaskreislauf und ein magnetischer Kreislauf) ablaufen, bietet sich primär die Kälteerzeugung bei tiefen (4-20 K) oder sehr tiefen Temperaturen (< 4 K) an, um zum Beispiel tiefsiedende Gase, wie Wasserstoff oder Helium, zu verflüssigen. Es ist jedoch auch möglich, eine derartige Anordnung als Wärmepumpe, also zu Heizzwecken, zu verwenden. Kältemaschine und Wärmepumpe ist gemeinsam, dass Wärme von einem kälteren zu einem wärmeren Reservoir unter Arbeitsleistung transportiert wird. Für die Kältemaschine ist der Nutzen die bei einer Temperatur unterhalb der Umgebungstemperatur aufgenommene Wärme, bei einer Wärmepumpe ist es die bei einer Temperatur oberhalb der Umgebungstemperatur abgegebene Heizwärme. Das physikalische Prinzip bleibt aber gleich.

Da man bei den bekannten derartigen Vorrichtungen allerdings immer zwei eigenständige Kühlmechanismen hat, ist der apparative Aufwand relativ groß. So muss sowohl für die Vorkühlstufe(n) mit einem Gaskältekreislauf oder mit flüssigem Stickstoff als auch für die magnetische Kühlstufe ein separater Antriebsmechanismus vorhanden sein, zum Beispiel in Form eines Kompressors bzw. einer Apparatur, die das magnetische Material in einen Permanentmagneten zyklisch hinein- und hinausbewegt. Auch ein Wärmeträgermedium muss durch das aktive Regeneratorbett der magnetischen Kühlstufe gefördert werden. Das Arbeitsfluid des regenerativen zyklischen Prozesses und Wärmeträgermedium der magnetischen Kühlstufe sind zwei verschiedene Medien bzw. zumindest hydraulisch voneinander getrennt. Auch das (passive) Wärmespeichermedium des regenerativen Prozesses und das aktive Regeneratorbett sind nicht identisch.

Zweistufige Kryokühler, die alleinig auf einem Gaskältekreislauf beruhen, werden in jüngster Zeit auch zur Verflüssigung von tiefsiedenden Gasen, wie Helium, verwendet. Eine besonders interessante Anwendung ist der Einsatz eines Pulsrohrkühlers zur Wiederverflüssigung von verdampftem Helium in einer Apparatur mit einem supraleitenden Magneten, wie es beispielsweise in der Patentschrift US2002/0002830A1 beschrieben wird. Die Kühlung der Magnetspule erfolgt zwar immer noch über die Verdampfung von Helium; im Gegensatz zu konventionellen Systemen allerdings treten nach außen keine Verluste an Helium oder auch anderen Kryogenen auf. In diesen Kühlern kommen im Wärmespeichermedium (=passiver Regenerator) der zweiten Kühlstufe auch magnetische Materialien zum Einsatz, allerdings aus einem ganz anderen Grund als in aktiven Regeneratorbetten von magnetischen Kühlern. Diese Materialien weisen im Bereich ihres magnetischen Übergangs nämlich im Vergleich zum Arbeitsgas eine große Wärmekapazität auf, was unabdingbar ist, damit der Kälteprozess durchlaufen werden kann. Die magnetischen Materialien müssen vom Magnetfeld des supraleitenden Magneten oft sogar abgeschirmt werden, um ihre Wirksamkeit nicht einzubüssen. Ein äußeres Magnetfeld ist in diesem Fall also sogar unerwünscht. Zudem arbeitet - im Gegensatz zu magnetischen Kühlern - ein Pulsrohrkühler nicht sehr effizient, was zu relativ hohen Betriebskosten für die Kühlung des Magnetsystems führt. Ein thermodynamisch effizienteres Verfahren zur Kälteerzeugung wäre somit vorteilig.

Aufgabe der vorliegenden Erfindung ist es somit, eine Vorrichtung zum Transport von Wärme von einem kalten Reservoir zu einem warmen Reservoir, in welcher mindestens zwei zyklische Prozesse zum Wärmetransport unter Arbeitsaufnahme ablaufen, derart zu verbessern, dass einerseits eine erhebliche apparative Vereinfachung der Vorrichtung ermöglicht wird und andererseits eine Steigerung der Effizienz und Erhöhung der Leistungsdichte einer derartigen Vorrichtung auftritt.

Erfindungsgemäß wird diese Aufgabe dadurch gelöst, dass das Wärmespeichermedium des regenerativen zyklischen Prozesses ein magnetokalorisches Material für den magnetokalorischen zyklischen Prozess umfasst, wobei sich das magnetokalorische Material in einem Regeneratorbereich mit einem kalten Ende und mit einem warmen Ende befindet, und dass das Arbeitsfluid des regenerativen zyklischen Prozesses zusätzlich als Wärmeträgermedium für den magnetokalorischen zyklischen Prozess dient. Die erfinderische Vorrichtung kann Teil einer mehrstufigen Anordnung zum Transport von Wärme von einem kalten Reservoir zu einem warmen Reservoir sein, insbesondere dann, wenn der Wärmetransport über eine große Temperaturdifferenz hinweg stattfindet.

Der Vorteil einer erfindungsgemäßen Vorrichtung gegenüber Vorrichtungen gemäß dem Stand der Technik besteht darin, dass der apparative Aufwand stark reduziert werden kann. Die Vorteile der erfindungsgemäßen Vorrichtung gegenüber dem Stand der Technik kann exemplarisch anhand der Anordnung aus der Druckschrift "Performance testing of a 4 K active magnetic regenerative refrigerator" (S.F. Kral et. al., Adv. Cry. Eng., Vol. 45A, S. 329) erläutert werden. Wenn das Arbeitsfluid eines Kühlers eines regenerativen zyklischen Prozesses, beispielsweise des bei der bekannten Vorrichtung verwendeten Gifford-McMahon-Kühlers, im Sinne der Erfindung als Wärmeträgermedium der magnetokalorischen Kühlstufe genutzt wird, können beide in vorteilhafter Weise über denselben Antriebsmechanismus gefördert werden. Ebenso stellt die erfindungsgemäße Verwendung des aktiven Materials der magnetokalorischen Kühlstufe als Regeneratormaterial im Gifford-McMahon-Kühler eine apparative Vereinfachung dar. Zudem ist der erfindungsgemäße kombinierte Prozess thermodynamisch effizienter als ein üblicher regenerativer Gaskreislauf alleine (wie er zum Beispiel für den Fall einer Gaskältemaschine in einem Pulsrohrkühler oder Gifford-McMahon-Kühler umgesetzt wird). Die Kälte- oder Heizleistung lässt sich steigern, ohne dass das Volumen der Maschine sehr viel größer wird, was zu einer Steigerung der Leistungsdichte beiträgt. Ferner ist ein sowieso vorhandenes äußeres Magnetfeld (wie zum Beispiel in der Patentschrift US2002/0002830A1 beschrieben) nicht störend und sogar von Vorteil, da es für den magnetokalorischen Kreislauf nutzbar gemacht werden kann.

Eine besonders bevorzugte Ausführungsform der erfindungsgemäßen Vorrichtung zum Transport von Wärme von einem kalten Reservoir zu einem warmen Reservoir zeichnet sich dadurch aus, dass das kalte Reservoir eine Temperatur unter der Umgebungstemperatur und das warme Reservoir eine Temperatur aufweist, die gleich oder größer als die Umgebungstemperatur ist. Somit lässt sich Kälte unterhalb der Umgebungstemperatur durch eine Kältemaschine erzeugen, wodurch sich eine Vielzahl von Anwendungsmöglichkeiten ergibt. Denkbar ist es jedoch auch, das Prinzip für eine Wärmepumpe zu Heizzwecken einzusetzen.

Die erfindungsgemäße Vorrichtung ist besonders dann vorteilhaft, wenn der regenerative zyklische Prozess auf einem Stirling-, einem Vuilleumier-, einem Gifford-Mc-Mahon- oder einem Pulsrohr-Gaskreislauf beruht. Alle Prozesse werden vor allem zur Kälteerzeugung, und hier speziell bei Temperaturen unter 100 K, eingesetzt. Die auf diesen Prozessen beruhenden Maschinen (speziell für einen Gifford-Mc-Mahon- oder einem Pulsrohr-Kühler) sind in Kombination mit dem magnetokalorischen Prozess dann insgesamt effizienter und weisen eine größere Leistungsdichte auf.

Ebenso ist es vorteilhaft, wenn das magnetokalorische Material verschiedene Komponenten mit unterschiedlicher Curie-Temperatur umfasst, die schichtweise in Reihenfolge abfallender Curie-Temperatur im Regeneratorbereich nebeneinander angeordnet sind, so dass die Komponente des magnetokalorischen Materials mit der höchsten Curie-Temperatur am warmen Ende und die Komponente des magnetokalorischen Materials mit der tiefsten Curie-Temperatur am kalte Ende des Regeneratorbereichs zu liegen kommen. Durch diese Aneinanderreihung verschiedener Komponenten ist eine aktive magnetische Regeneration möglich und es können relative große Temperaturdifferenzen (z.B. 60 K) bei nur mäßiger Änderung der Magnetfeldstärke (z.B. 2 T) überspannt werden.

Die erfindungsgemäße Vorrichtung ist besonders dann vorteilhaft, wenn eine Einrichtung zum Bereitstellen eines Magnetfeldes und/oder Ausblenden eines Hintergrund-Magnetfeldes vorgesehen ist, welche zumindest am Ort des magnetokalorischen Materials ein Magnetfeld bereitstellt und/oder ausblendet. Auf diese Weise kann das magnetokalorische Material wechselweise magnetisiert und entmagnetisiert werden, wodurch eine Temperaturänderung im Material auftritt.

Eine weitere vorteilhafte Ausführungsform der erfindungsgemäßen Vorrichtung zeichnet sich dadurch aus, dass die Einrichtung zum Bereitstellen eines Magnetfeldes und/oder Ausblenden eines Hintergrund-Magnetfeldes einen Permanentmagneten umfasst. Die relative Lage des Permanentmagneten gegenüber dem magnetokalorischen Material wird über eine geeignete Vorrichtung derart variiert, dass das magnetokalorische Material den beabsichtigten Prozess durchlaufen kann. Dies führt zu einer einfachen und robusten Ausführung der erfindungsgemäßen Vorrichtung.

Eine alternative Ausführungsform sieht vor, dass die Einrichtung zum Bereitstellen eines Magnetfeldes und/ oder Ausblenden eines Hintergrund-Magnetfeldes eine Magnetspulenwicklung mit einem normalleitenden und/oder einem supraleitenden Draht umfasst. Über einen variablen Strom kann dann das magnetokalorische Material wechselweise magnetisiert und entmagnetisiert (und somit erwärmt und abgekühlt) werden, ohne dass Teile bewegt werden müssen. Dies ist besonders dann vorteilig, wenn die Vorrichtung in einer Umgebung zum Einsatz kommen soll, die empfindlich auf Vibrationen reagiert.

Bei einer speziellen Ausführungsform der erfindungsgemäßen Vorrichtung ist als Einrichtung zum Ausblenden eines Hintergrund-Magnetfeldes eine Magnetfeldabschirmung aus weichmagnetischem Material vorgesehen. Durch geeignete Variation der relativen Lage der Abschirmung gegenüber dem magnetokalorischen Material kann das magnetokalorische Material somit effizient mit geringem zusätzlichem Aufwand magnetisiert bzw. entmagnetisiert werden.

Die Erfindung betrifft darüber hinaus eine supraleitende Magnetanordnung mit einer erfindungsgemäßen Vorrichtung zum Transport von Wärme von einem kalten Reservoir zu einem warmen Reservoir. In einer supraleitenden Magnetanordnung muss einerseits zumindest der Bereich der supraleitenden Wicklungen auf tiefe Temperaturen gekühlt werden, andererseits stellt die Anordnung ein Magnetfeld zur Verfügung, welches im magnetokalorischen Material einer erfindungsgemäßen Vorrichtung zeitlich variabel abgeschirmt werden kann und so das Durchlaufen des zur Kühlung benötigten magnetokalorischen Prozesses ermöglicht.

Dabei ist es besonders vorteilhaft, wenn die supraleitende Magnetanordnung Teil einer Apparatur für die magnetische Resonanz (=MR) ist, insbesondere für die bildgebende Kernspinresonanz (MRI) oder Kernspin-Magnetresonanz-Spektroskopie (NMR). Dies sind Analyseverfahren, bei denen üblicherweise flüssige Kryogene zur Kühlung der supraleitenden Magnetanordnung eingesetzt werden, so dass eine direkte Kühlung (ohne Nachfüllen der ansonsten verdampften Kryogene) für den Anwender sehr attraktiv ist.

Es ist jedoch auch denkbar, dass die supraleitende Magnetanordnung Teil einer Apparatur zur lonencyclotronresonanz-Spektroskopie (ICR) oder zur Elektronenspinresonanz (ESR, EPR) ist. Auch hier verbessert sich die Anwenderfreundlichkeit durch die autonome Kühlung der supraleitenden Magnetanordnung.

Die Erfindung betrifft darüber hinaus ein Verfahren zum Transport von Wärme von einem kalten Reservoir zu einem warmen Reservoir, wobei mindestens zwei zyklische Prozesse zum Wärmetransport unter Arbeitsaufnahme ablaufen, wovon mindestens einer ein regenerativer zyklischer Prozess ist, bei dem der Wärmetransport über ein Arbeitsfluid erfolgt, und mindestens einer ein magnetokalorischer zyklischer Prozess ist, bei dem ein Wärmeaustausch über ein magnetokalorisches Material erfolgt. Das erfindungsgemäße Verfahren ist dadurch gekennzeichnet, dass das magnetokalorische Material auch als Wärmespeichermedium im regenerativen zyklischen Prozess und das Arbeitsfluid auch als Wärmeträgermedium für den magnetokalorischen zyklischen Prozess verwendet wird.

Eine Variante des erfindungsgemäßen Verfahrens sieht vor, dass im regenerativen zyklischen Prozess das Arbeitsfluid eine Kompressionsphase, eine Phase der Wärmeabgabe, eine Expansionsphase und eine Phase der Wärmeaufnahme durchläuft. Auf diese Weise ist ein thermodynamischer Kreisprozess möglich, bei dem Wärme von einem kalten Reservoir zu einem warmen Reservoir unter Arbeitsaufnahme angehoben wird.

Bei einer weiteren vorteilhaften Variante wird zumindest am Ort des magnetokalorischen Materials periodisch die Feldstärke eines Magnetfeldes variiert. Das magnetokalorische Material erfährt somit eine Erwärmung und Abkühlung und kann einen thermodynamischen Kreislauf durchlaufen, bei dem Wärme von einem kalten Reservoir zu einem warmen Reservoir angehoben wird.

Es ist jedoch auch denkbar, dass die Variation der Feldstärke durch zyklische Veränderung der relativen Lage des magnetokalorischen Materials gegenüber einem Permanentmagneten erfolgt. Dies ist eine einfache, robuste und kostengünstige Variante.

Darüber hinaus kann die Variation der Feldstärke durch Änderung des Stromflusses in einer normalleitenden und/oder supraleitenden Magnetspule erfolgen. In diesem Fall werden dann keine Teile bewegt, wodurch eine besonders vibrationsarme Variante des erfindungsgemäßen Verfahrens ermöglicht wird.

Eine besonders vorteilhafte Variante des erfindungsgemäßen Verfahrens sieht vor, dass zumindest am Ort des magnetokalorischen Materials periodisch die Stärke einer Magnetfeldabschirmung in einem Hintergrund-Magnetfeld variiert wird. Somit kann mit geringem Aufwand das magnetokalorische Material magnetisiert und entmagnetisiert werden.

Des Weiteren erfolgen im regenerativen zyklischen Prozess die Phase der Wärmeaufnahme und die Kompressionsphase bei hohem magnetischem Feld im magnetokalorischen Material, die Phase der Wärmeabgabe und die Expansionsphase bei niedrigem magnetischem Feld im magnetokalorischen Material. Auf diese Weise wird in dem Verfahren sowohl ein regenerativer als auch ein magnetokalorischer Kreisprozess in einer einzigen Vorrichtung ermöglicht, was zu einer hohen Leistung und Effizienz einer darauf beruhenden Maschine führt.

Das erfindungsgemäße Verfahren ist vor allem dann von Vorteil, wenn der Wärmetransport innerhalb einer supraleitenden Magnetanordnung erfolgt, wobei die supraleitende Magnetanordnung Teil einer Apparatur für die magnetische Resonanz (=MR) ist, insbesondere für die bildgebende Kernspinresonanz (MRI) oder Kernspin-Magnetresonanz-Spektroskopie (NMR), oder Teil einer Apparatur zur Ionencyclotronresonanz-Spektroskopie (ICR) oder zur Elektronenspinresonanz (ESR, EPR) ist. Somit lassen sich derartige Apparaturen effizient und benutzerfreundlich kühlen. Im Vergleich zu der konventionellen Kühlung mit flüssigen Kryogenen erhöht sich die Bedienerfreundlichkeit der Apparatur und die Kosten für die Kühlung lassen sich reduzieren, insbesondere dann, wenn die Preise für die Kryogene in absehbarer Zeit steigen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:

Fig. 1a     einen schematischen Aufbau einer Vorrichtung zum Transport von Wärme von einem kalten Reservoir zu einem warmen Reservoir in einem regenerativen zyklischen Prozess nach Stirling (Stand der Technik);

Fig. 1b     einen schematischen Aufbau einer Vorrichtung zum Transport von Wärme von einem kalten Reservoir zu einem warmen Reservoir in einem magnetokalorischen zyklischen Prozess (Stand der Technik);

Fig. 1c     einen schematischen Aufbau einer erfindungsgemäßen Vorrichtung zum Transport von Wärme von einem kalten Reservoir zu einem warmen Reservoir;

Fig. 2a     die verschiedenen Prozessphasen in einer Vorrichtung zum Transport von Wärme von einem kalten Reservoir zu einem warmen Reservoir in einem regenerativen zyklischen Prozess nach Stirling (Stand der Technik);

Fig. 2b     die verschiedenen Prozessphasen in einer Vorrichtung zum Transport von Wärme von einem kalten Reservoir zu einem warmen Reservoir in einem magnetokalorischen zyklischen Prozess (Stand der Technik);

Fig. 2c     die verschiedenen Prozessphasen in einer erfindungsgemäßen Vorrichtung zum Transport von Wärme von einem kalten Reservoir zu einem warmen Reservoir;

Fig. 3     eine Ausführungsform einer erfindungsgemäßen Vorrichtung zur Kühlung eines supraleitenden Magnetsystems;

Fig. 4     die Prozessphasen III→IV und VI→I in einer erfindungsgemäßen Vorrichtung zum Transport von Wärme von einem kalten Reservoir zu einem warmen Reservoir mit Volumenelementen des Arbeitsfluids;

Fig. 5a     alle Prozessphasen einer erfindungsgemäßen Vorrichtung für ein erstes Volumenelement des Arbeitsfluids in einem Temperatur-Entropie-Diagramm (T-S-Diagramm);

Fig. 5b     alle Prozessphasen einer erfindungsgemäßen Vorrichtung für ein beliebiges Volumenelement des Arbeitsfluids in einem Temperatur-Entropie-Diagramm (T-S-Diagramm);

Fig. 5c    alle Prozessphasen einer erfindungsgemäßen Vorrichtung für ein letztes Volumenelement des Arbeitsfluids in einem Temperatur-Entropie-Diagramm (T-S-Diagramm); und

Fig. 6    die Leistungserhöhung und den exergetischer Wirkungsgrad in Abhängigkeit vom Druckverhältnis für eine beispielhafte erfindungsgemäße Hybrid-Stirling-Kältemaschine.

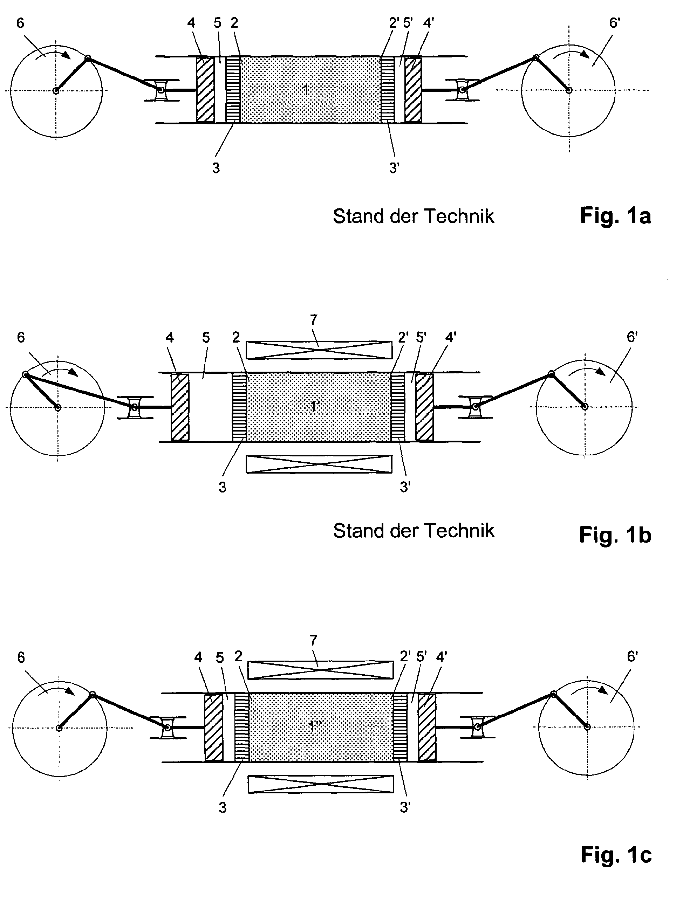

**Fig. 1a** zeigt schematisch den Aufbau einer (einstufigen) regenerativen Stirling-Gaskältemaschine (oder -Wärmepumpe) nach dem Stand der Technik. Die Stirling-Maschine stellt die Grundform aller Maschinen dar, die auf einem regenerativen Kreislauf beruhen. Die anderen Gaskältemaschinen, wie Gifford-McMahon-Kühler oder Pulsrohrkühler, leiten sich von dieser Grundform ab.

Die Maschine besteht aus einem Wärmespeichermedium, einem so genannten (passiven) Regenerator 1, der an seinem warmen Ende 2 von einem warmen Wärmeübertrager 3 (für eine Kältemaschine etwa bei Umgebungstemperatur) und an seinem kalten Ende 2' von einem kalten Wärmeübertrager 3' (für eine Kältemaschine unter Umgebungstemperatur) begrenzt wird. Der Regenerator 1 besteht aus einem fein verteilten Feststoff, zum Beispiel in Form von gewebten Metallsieben oder von Partikelschüttungen, und besitzt im Vergleich zum Arbeitsfluid, zum Beispiel Heliumgas, eine hohe Wärmekapazität. Der Regenerator 1 nimmt während des Durchströmens vom Arbeitsfluid Wärme auf und gibt sie nach Strömungsumkehr wieder ans Arbeitsfluid ab, ohne dass sich die Temperaturverteilung im Regenerator 1 wesentlich ändert. Das Arbeitsfluid wird über einen warmen Kolben **4** in einem Kompressionsraum **5** verdichtet und (nach Überschieben) von einem kalten Kolben **4'** in einem Expansionsraum **5'** entspannt. Damit die verschiedenen Schritte zeitlich nacheinander auftreten, wird die Bewegung der Kolben 4, 4' über geeignete Antriebsmechanismen **6, 6'** derart gesteuert, dass der warme Kolben 4 dem kalten Kolben 4' um ein Viertel der Periodendauer vorauseilt (90°-Phasenverschiebung).

In einer einstufigen magnetischen Kältemaschine oder Wärmepumpe (**Fig. 1b**) gibt es einen (aktiven) Regenerator **1'**, der aus einem magnetokalorischen Arbeitsmedium, meistens in Form einer Partikelschüttung in einem Regeneratorbett, besteht. Wiederum wird der Regenerator 1' von zwei Wämeübertragern 3, 3' begrenzt, nämlich an seinem warmen Ende 2 von dem warmen Wärmeübertrager 3 und an seinem kalten Ende 2' von dem kalten Wärmeübertrager 3'. Zur Überbrückung großer Temperaturunterschiede zwischen den beiden Wärmeübertragern 3, 3' können im Regenerator 1' mehrere Komponenten von magnetisch aktiven Materialien mit unterschiedlicher Curie-Temperatur verwendet werden, die schichtweise nebeneinander liegen, so dass die Komponente des magnetokalorischen Materials mit der höchsten Curie-Temperatur am warmen Wärmeübertrager 3 und die Komponente des magnetokalorischen Materials mit der tiefsten Curie-Temperatur am kalten Wärmeübertrager 3' zu liegen kommen (nicht gezeigt). Die beiden Kolben 4, 4' fördern ein Wärmeträgermedium (Gas oder Flüssigkeit) durch den (aktiven) Regenerator 1'; ihre Bewegung über den Antriebsmechanismus 6, 6' erfolgt in Phase und es tritt keine Kompression oder Expansion des Wärmeträgermediums auf. Das Arbeitsmedium (=magnetokalorisches Material) im Regenerator 1' wird über einen Magneten **7** magnetisiert. Der Magnet 7 kann als Permanentmagnet ausgebildet sein, wobei er dann zyklisch über das Regeneratorbett hin- und herbewegt wird, oder als Spule aus normal- und/oder supraleitendem Draht. Die Magnetisierung und Entmagnetisierung des magnetokalorischen Materials im Regenerator 1' erfolgt dann durch Laden und Entladen der Magnetspule. Die Bewegung der beiden Kolben 4, 4'und die Bewegung des Permanentmagneten bzw. das Laden und Entladen der Magnetspule müssen zeitlich so aufeinander abgestimmt sein, dass vom magnetokalorischen Material ein magnetokalorischer Kreislauf durchfahren wird.

**Fig. 1c** zeigt schematisch den Aufbau der erfindungsgemäßen Vorrichtung. Bestandteile aus beiden Maschinen gemäß Fig. 1 a und Fig. 1 b sind hier zu einer einstufigen Kältemaschine oder Wärmepumpe vereint. Der (passive und aktive) Regenerator 1" umfasst das magnetokalorische Arbeitsmedium, zum Beispiel in Form einer Partikelschüttung von vorzugsweise mehreren magnetisch aktiven Materialien mit unterschiedlichen Curie-Temperaturen, wobei die Komponente des magnetokalorischen Materials mit der höchsten Curie-Temperatur am warmen Ende 2 des Regenerators 1" und die Komponente des magnetokalorischen Materials mit der tiefsten Curie-Temperatur am kalten Ende 2' des Regenerators 1" zu liegen kommen. Der Regenerator 1" dient - wie in einer Stirling-Maschine gemäß Fig. 1 - jetzt aber auch der Zwischenspeicherung von Wärme. Das Arbeitsfluid, welches wie im regenerativen Prozess der Maschine gemäß Fig. 1 a im Kompressionsraum 5 vom Kompressionskolben 4 verdichtet und im Expansionsraum 5' vom Expansionskolben 4' entspannt wird, dient gleichzeitig als Wärmeträgermedium für den magnetokalorischen Prozess. Die beiden Kolben 4, 4' fördern das Wärmeträgermedium (=Arbeitsfluid des regenerativen Prozesses) durch den Regenerator 1 ", wo es Wärme abgibt oder aufnimmt. Das magnetokalorische Material im Regenerator 1" wird über einen Magneten 7 magnetisiert. Auch hier kann der Magnet 7 kann als Permanentmagnet ausgebildet sein, wobei er dann zyklisch über das Regeneratorbett hin- und herbewegt wird, oder als Spule aus normal- und/oder supraleitendem Draht. Die Magnetisierung und Entmagnetisierung des magnetokalorischen Materials im Regenerator 1" erfolgt dann durch Laden und Entladen der Magnetspule. Es ist auch möglich, ein in der Umgebung bereits vorhandenes Magnetfeld durch eine geeignete Vorrichtung (z.B. aus Weichmetall oder einer weiteren Magnetspule) abzuschirmen. Da sowohl ein regenerativer Gaskreislauf als auch ein magnetokalorischer Prozess in einer Maschine vereint sind, müssen die Prozessphasen (Kompression, Expansion, Hin- und Herschieben des Arbeitsfluids durch den Regenerator 1 ", Magnetisierung, Entmagnetisierung), zeitlich sorgfältig aufeinander abgestimmt werden.

Bevor die in einer erfindungsgemäßen Vorrichtung ablaufenden Prozessphasen genauer beschrieben werden, ist es hilfreich, die Prozessphasen einer Stirling-Maschine (nach Fig. 1 a) bzw. einer magnetokalorischen Maschine (nach Fig. 1 b) für sich zu betrachten.

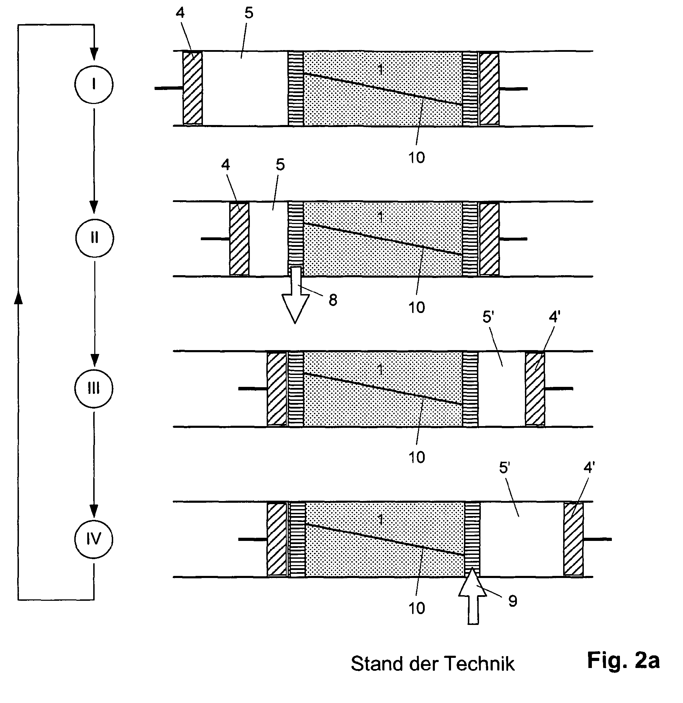

In **Fig. 2a** sind die verschiedenen Prozessphasen eines regenerativen Gaskreislaufes in einer einstufigen Stirling-Maschine zum Anheben von Wärme vereinfacht und schematisch dargestellt. Im Einzelnen treten die folgenden Prozessschritte auf:

I→II Isotherme Kompression

Das Arbeitsfluid im Kompressionsraum 5 wird vom Kolben 4 isotherm unter Wärmeabgabe verdichtet. Die abgegebene Wärme **8** kann z.B. von einem Kühlmedium bei konstanter Temperatur aufgenommen werden.

II→III Isochores Abkühlen (Wärmeabgabe)

Das Arbeitsfluid im Kompressionsraum 5 wird bei konstantem Volumen durch den Regenerator 1 in den Expansionsraum 5' verschoben. Im Regenerator 1 gibt das Arbeitsfluid Wärme an das Wärmespeichermedium des Regenerators 1 (Matrix des Regenerators 1) zur Zwischenspeicherung ab und kühlt sich ab.

III→IV Isotherme Expansion

Das Arbeitsfluid im Expansionsraum 5' wird vom Kolben 4' unter Wärmeaufnahme isotherm entspannt. Die aufgenommene Wärme **9** wird dabei von außen vom zu kühlenden Objekt/ Raum zugeführt.

IV→I Isochores Erwärmen (Wärmeaufnahme)

Das Arbeitsfluid im Expansionsraum 5' wird bei konstantem Volumen durch den Regenerator 1 in den Kompressionsraum 5 verschoben. Im Regenerator 1 nimmt das Arbeitsfluid die zwischengespeicherte Wärme vom Wärmespeichermedium auf und erwärmt sich somit. Der Ausgangszustand ist wieder erreicht.

Das Temperaturprofil **10** im Regenerator 1 bleibt während aller Prozessphasen unverändert. Der Maschine muss Nettoarbeit zugeführt werden, die abgegebene Wärme 8 ist um diesen Energiebetrag größer als die aufgenommene Wärme 9.

Eine Stirling-Maschine besitzt unter idealen Bedingungen die höchstmögliche Leistungszahl $\varepsilon$ des Carnot-Prozesses ($\varepsilon_{Car}$) und somit einen Gütegrad **($\nu = \varepsilon/\varepsilon_{Car}$)** von 1. Andere Kühler, wie zum Beispiel Pulsrohrkühler, arbeiten - auch im idealen Fall - nicht reversibel und sind somit nicht so effizient.

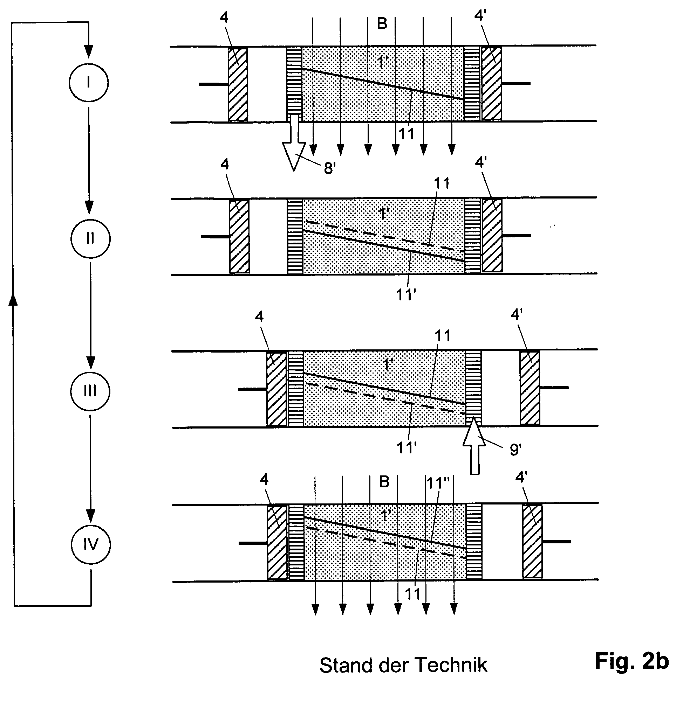

In **Fig. 2b** sind die verschiedenen Prozessphasen einer einstufigen magnetokalorischen Kältemaschine oder Wärmepumpe vereinfacht und schematisch dargestellt.

I→II Entmagnetisierung

Das magnetokalorische Material im (aktiven) Regenerator 1' wird entmagnetisiert, d.h. ein im Zustand I vorhandenes Magnetfeld der Stärke B wird reduziert (z.B. durch Entfernen des Permanentmagneten, Entladen der Magnetspule oder Aktivieren der Abschirmung). Das magnetokalorische Material des Regenerators 1' (Matrix des Regenerators 1') kühlt sich dabei an jedem Ort über ihre Länge um eine bestimmte Temperaturdifferenz ab; der Temperaturverlauf **11** im Regenerator 1' vor der Entmagnetisierung unterscheidet sich somit vom Temperaturverlauf **11'** im Regenerator 1' nach der Entmagnetisierung.

II→III Abkühlen (Wärmeabgabe)

Das warme Wärmeträgermedium wird mit den Kolben 4, 4' durch das magnetokalorische Material des Regenerators 1' hindurch verschoben. Dabei kühlt es sich ab (d.h. das magnetokalorische Material nimmt Wärme auf). Beim Austritt aus dem Regenerator 1' ist das Wärmeträgermedium zunächst kälter als die Umgebung dort. Das Wärmeträgermedium kann somit die Wärme **9'** aus der (kalten) Umgebung aufnehmen. Während des Überströmens ändern sich die Temperaturen im Regenerator 1' und im Zustand III hat sich der Temperaturverlauf 11 (wie im Zustand I) wieder eingestellt.

III→IV Magnetisierung

Das magnetokalorische Material des Regenerators 1' wird bis zur Feldstärke B magnetisiert (mit Permanentmagneten, durch Laden einer Spule oder Entfernen einer Abschirmung). Das magnetokalorische Material des Regenerators 1' erwärmt sich an jedem Ort über seine Länge um eine bestimmte Temperaturdifferenz, so dass sich der Temperaturverlauf **11"** einstellt.

IV→I Aufwärmen (Wärmeaufnahme)

Das kalte Wärmeträgermedium wird mit den Kolben 4, 4' durch das magnetokalorische Material der Regenerators 1' hindurch zurück verschoben. Dabei wärmt es sich auf (d.h. das magnetokalorische Material gibt Wärme ab). Beim Austritt aus dem Regenerator 1' ist das Wärmeträgermedium zunächst wärmer als die Umgebung dort. Das Wärmeträgermedium gibt Wärme **8'** an die (warme) Umgebung ab. Während des Überströmens ändern sich die Temperaturen im Regenerator 1' und im Zustand I hat sich der ursprünglich vorhandene Temperaturverlauf 11 wieder eingestellt.

Auch der magnetischen Kältemaschine oder Wärmepumpe muss Arbeit (Bewegung eines Permanentmagneten oder Laden einer Magnetspule) zugeführt werden, die abgegebene Wärme 8' ist um diesen Energiebetrag größer als die aufgenommene Wärme 9'. Wie in einer Stirlingmaschine sind hohe Gütegrade möglich.

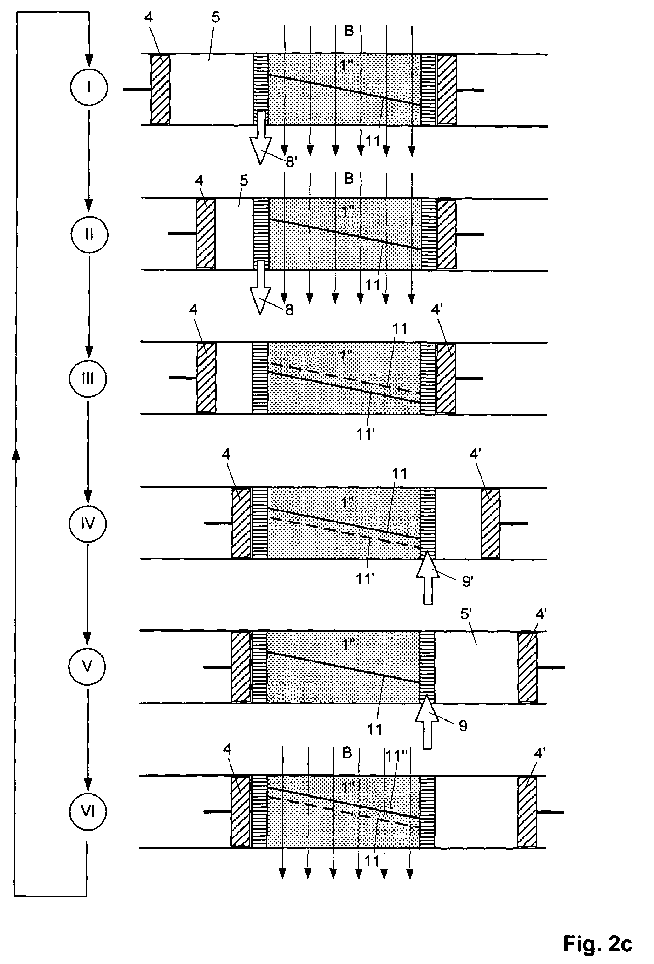

Die erfindungsgemäße Vorrichtung basiert auf einer Kombination von Prozessen wie beispielsweise in Fig. 2a und 2b gezeigt. **In Fig. 2c** sind die verschiedenen Prozessphasen einer derartigen kombinierten Kältemaschine bzw. Wärmepumpe schematisch dargestellt. Für den einfachsten Fall nur einer Kühlstufe umfasst eine derartige Vorrichtung - z.B. für eine Hybrid-Stirling-Kältemaschine - den Kompressionsraum 5 und den Expansionsraum 5' mit einem Regenerator 1" dazwischen. Wie bei einer magnetischen Maschine besteht zudem die Möglichkeit, ein äußeres Magnetfeld B ein- bzw. auszuschalten. Im Regenerator 1" herrscht zu Beginn die Temperaturverteilung 11.

Es resultiert der folgende Kreislauf:

I→II Isotherme Kompression

Bei Vorhandensein eines äußeren Magnetfeldes B wird das Arbeitsfluid im Kompressionsraum 5 vom Kolben 4 isotherm unter Wärmeabgabe verdichtet. Die abgegebene Wärme 8 kann z.B. von einem Kühlmedium bei konstanter Temperatur aufgenommen werden.

II→III Entmagnetisierung

Das magnetokalorische Material im Regenerator 1" wird entmagnetisiert, d.h. ein im Zustand I und II vorhandenes Magnetfeld der Stärke B wird reduziert (durch Entfernen des Permanentmagneten, Entladen der Magnetspule oder Aktivieren der Abschirmung). Das magnetokalorische Material des Regenerators 1" kühlt sich dabei an jedem Ort über seine Länge um eine bestimmte Temperaturdifferenz ab; der Temperaturverlauf 11 im Regenerator 1" vor der Entmagnetisierung unterscheidet sich somit vom Temperaturverlauf 11' im Regenerator 1" nach der Entmagnetisierung.

III→IV Abkühlen (Wärmeabgabe)

Das warme Wärmeträgermedium (= Arbeitsfluid im Prozessschritt I→II) wird mit den Kolben 4, 4' durch das magnetokalorische Material des Regenerators 1" hindurch verschoben. Dabei kühlt es sich ab (d.h. das magnetokalorische Material nimmt Wärme auf). Beim Austritt aus dem Regenerator 1" ist das Wärmeträgermedium zunächst kälter als die Umgebung dort. Das Wärmeträgermedium kann somit die Wärme 9' aus der (kalten) Umgebung aufnehmen. Während des Überströmens ändern sich die Temperaturen im Regenerator 1" und im Zustand IV hat sich der Temperaturverlauf 11 (wie im Zustand I und II) wieder eingestellt.

IV→V Isotherme Expansion

Das Wärmeträgermedium im Expansionsraum 5' wird vom Kolben 4' unter Wärmeaufnahme isotherm entspannt. Die aufgenommene Wärme 9 wird dabei von außen vom zu kühlenden Objekt/ Raum zugeführt.

V→VI Magnetisierung

Das magnetokalorische Material des Regenerators 1" wird bis zur Feldstärke B magnetisiert (mit Permanentmagneten, durch Laden einer Spule oder Entfernen einer Abschirmung). Das magnetokalorische Material des Regenerators 1" erwärmt sich an jedem Ort über seine Länge um eine bestimmte Temperaturdifferenz, so dass sich der Temperaturverlauf 11" einstellt.

VI→I Aufwärmen (Wärmeaufnahme)

Das kalte Wärmeträgermedium (= Arbeitsfluid im Prozessschritt IV→V) wird mit den Kolben 4, 4' durch das magnetokalorische Material der Regenerators 1" hindurch zurück verschoben. Dabei wärmt es sich auf (d.h. das magnetokalorische Material gibt Wärme ab). Beim Austritt aus dem Regenerator 1" ist das Wärmeträgermedium zunächst wärmer als die Umgebung dort. Das Wärmeträgermedium gibt Wärme 8' an die (warme) Umgebung ab. Während des Überströmens ändern sich die Temperaturen im Regenerator 1" und im Zustand I hat sich der ursprünglich vorhandene Temperaturverlauf 11 wieder eingestellt.

Die Wärmezufuhr (Wärme 9', 9) aus dem zu kühlenden Raum (=nutzbare Kälte) erfolgt somit während zweier Prozessschritte (III→IV und IV→V). Die Wärmeabfuhr (Wärme 8', 8) an die warme Umgebung erfolgt während der Prozessschritte VI→I und I→II. Der Arbeitsaufwand steigt entsprechend. Der Gütegrad und die Effizienz der Vorrichtung sind jedoch hoch. Das Volumen der Vorrichtung entspricht in etwa dem Einzelvolumen einer der nicht kombinierten Maschinen aus Fig. 2a und 2b, wodurch die Leistungsdichte steigt.

Es können auch andere auf einem regenerativen Gasprozess aufbauende Maschinen verwendet werden, z.B. ein Gifford-McMahon-Kühler oder ein Pulsrohrkühler. Zu Erreichung sehr tiefer Temperaturen (<20 K) wird zudem eine derartige Vorrichtung mehrstufig aufgebaut sein. Es ist dann vorstellbar, dass eine kombinierte Kühlung gemäß der Erfindung nur in der kältesten Stufe zum Einsatz kommt.

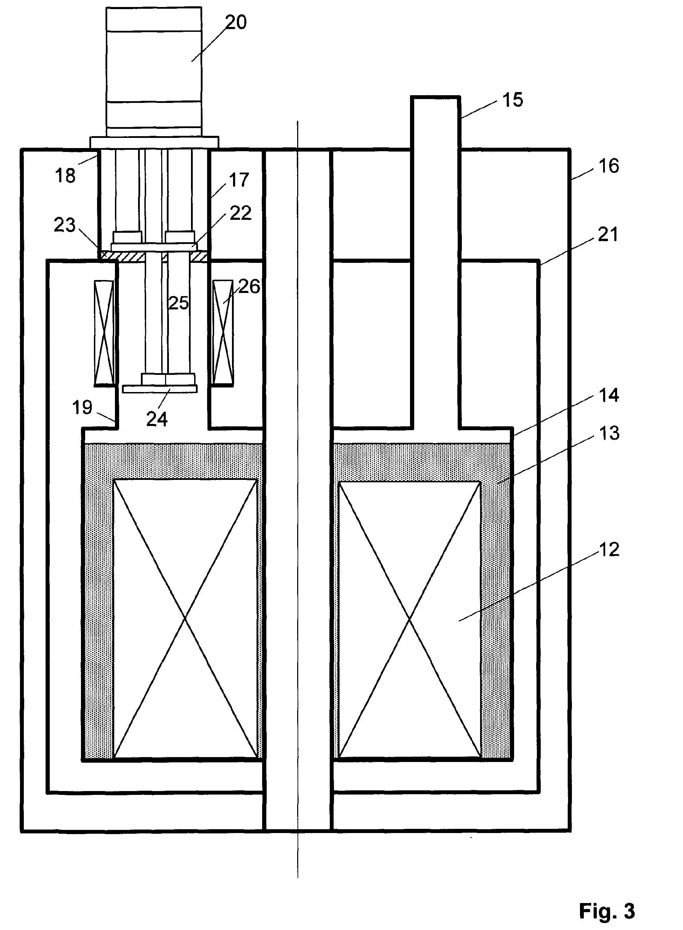

In **Fig. 3** ist in einer mehrstufigen Ausführung die erfindungsgemäße Vorrichtung basierend auf einem magnetischen Pulsrohrkühler zur Kühlung einer supraleitenden Magnetanordnung dargestellt. Dabei befindet sich eine erste Magnetspule **12** in einem mit flüssigem Helium **13** gefüllten Heliumbehälter **14.** Der Heliumbehälter 14 ist über mindestens ein Aufhängerohr **15** mit einem Außenmantel **16** verbunden. In einem Halsrohr **17,** dessen oberes warmes Ende **18** mit dem Außenmantel 16 und dessen unteres kaltes Ende **19** mit dem Heliumbehälter 14 verbunden ist, ist ein zweistufiger Kaltkopf **20** eines magnetischen Pulsrohrkühlers eingebaut. Der Heliumbehälter 14 ist ferner von einem Strahlungsschild **21** umgeben, welcher sowohl mit den Aufhängerohren 15 als auch dem Halsrohr 17 thermisch leitend verbunden ist. Zwischen der ersten Kältestufe **22** des Kaltkopfes 20 und dem Halsrohr 17 besteht eine wärmeleitende feste Verbindung **23,** über die Wärme vom Strahlungsschild 21 in die erste Kältestufe 22 des Kaltkopfes 20 geleitet wird. An der zweiten Kältestufe **24** des Kaltkopfes 20 wird aus dem Heliumbehälter 14 verdampftes Helium wieder verflüssigt. Im Gegensatz zu einem gewöhnlichen zweistufigen Pulsrohrkühler befindet sich im Regeneratorrohr **25** der zweiten Kältestufe 24 magnetokalorisches Material. Ohne magnetische Abschirmung liegt das Regeneratorrohr 25 im Streufeld der ersten Magnetspule 12. Mit der zweiten Magnetspule **26** jedoch ist es möglich, das Streufeld derart abzuschirmen oder zu verstärken, dass das magnetokalorische Material im Sinne der Erfindung - zusätzlich zu seiner Funktion als Wärmespeichermedium im regenerativen Gaskreislauf - zur Kälteerzeugung in einem magnetokalorischen zyklischen Prozess genutzt werden kann. Des Weiteren ist das Arbeitsfluid des regenerativen Gaskreislaufs (Heliumgas) Wärmeträgermedium für den magnetokalorischen zyklischen Prozess. Die Leistung und Effizienz des Kühlers kann auf diese Weise gesteigert werden, so dass zum einen kleinere Abmessungen des Kaltkopfes 20 und zum anderen Energieeinsparungen beim Betrieb möglich werden.

Der Einsatz einer erfindungsgemäßen Kühlvorrichtung ist daher vorteilig, wenn der Kaltkopf 20 im sowieso schon vorhandenen Streufeld eines supraleitenden Magneten platziert und das Magnetfeld dann in geeigneter Weise abgeschirmt werden kann. Apparaturen mit einer supraleitenden Magnetanordnung, wie zum Beispiel für die Kernspin-Resonanz-Spektroskopie, die bildgebende Kernspinresonanz (MRI), die Ionencyclotronresonanz-Spektroskopie (ICR) oder die Elektronenspinresonanz (ESR, EPR), lassen sich somit effizient und benutzerfreundlich kühlen.

Im Folgenden wird die Erfindung anhand eines Rechenbeispiels und weiterer Zeichnungen erläutert.

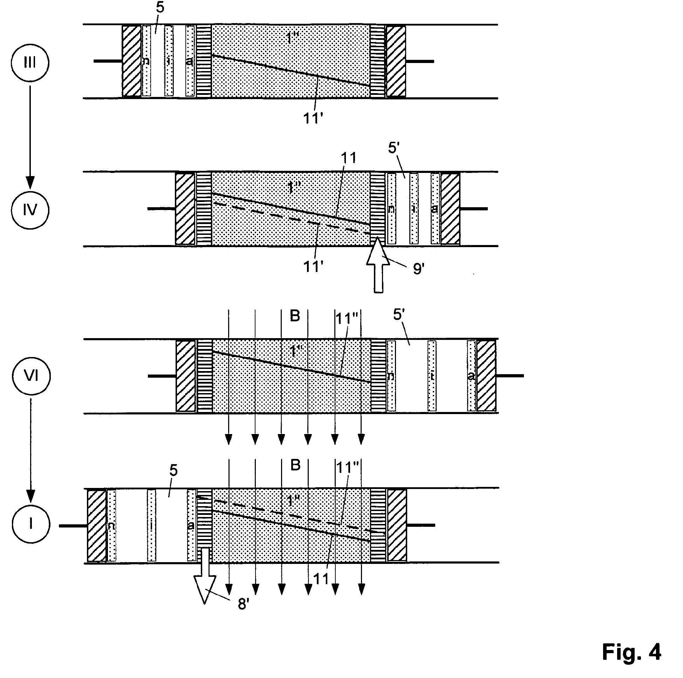

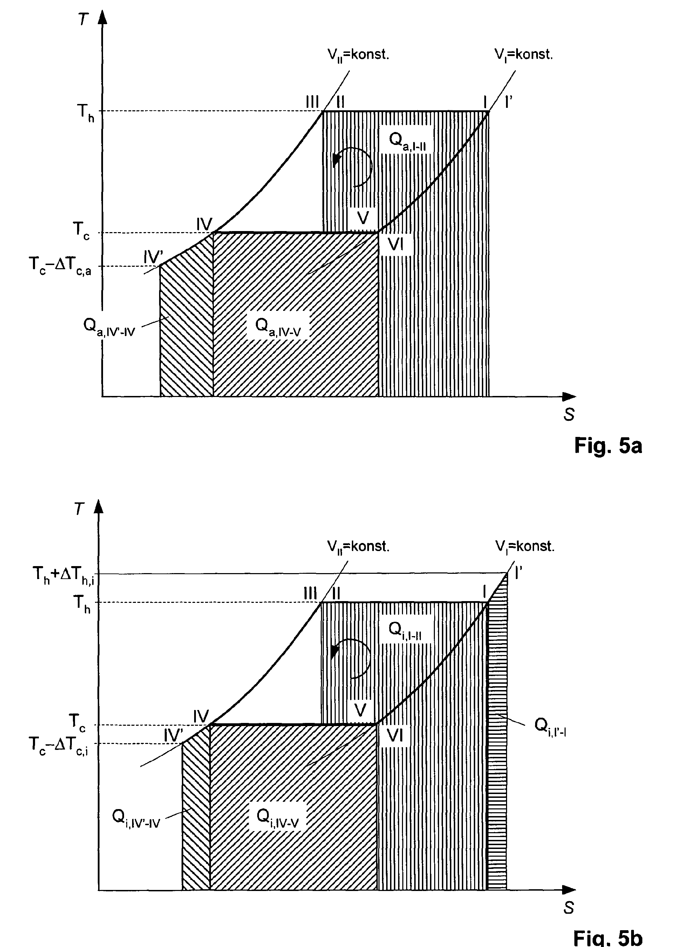

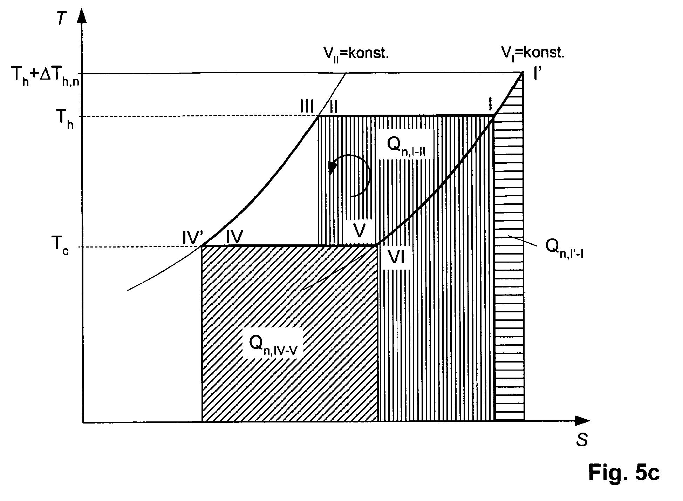

Beispielhaft wird eine ideale erfindungsgemäße Hybrid-Stirling-Kältemaschine zunächst während der Prozessphasen III→IV und VI→ I, wie in **Fig. 4** dargestellt, betrachtet. Das (ideale) Arbeitsfluid (z.B. Heliumgas) im Kompressionsraum 5 wird in n kleine Volumenelemente unterteilt. Jedes dieser Volumenelemente a, i, n durchläuft einen eigenen thermodynamischen Kreislauf, der für das erste Volumenelement a in **Fig. 5a** in einem Temperatur-Entropie-Diagramm (T-S-Diagramm) dargestellt ist. Beim Hinüberschieben in den Expansionsraum 5' kühlt sich das Volumenelement a von der Temperatur $T_h$ (Zustand III) auf die Temperatur $T_c$ ab. Wegen der Temperaturänderung des magnetokalorischen Materials wird das Volumenelement a noch weiter abgekühlt und tritt schließlich mit $T_c - \Delta T_{c,a}$ aus dem Regenerator 1" aus (Zustand IV' in Fig. 5a). Anschließend wird dem Volumenelement a (bei konstantem Volumen) von außen Wärme zugeführt, so dass es sich auf die Temperatur $T_c$ aufwärmt (Zustand IV). Ein anderes, beliebiges inneres Volumenelement i (s. T-S-Diagramm in **Fig. 5b**) tritt auch mit der Temperatur $T_h$ in den Regenerator 1 " ein, verlässt diesen aber mit der Temperatur $T_c - \Delta T_{c,i}$, die höher ist als die Austrittstemperatur des ersten Volumenelements a, da der Regenerator 1" von den Volumenelementen vorher bereits Wärme aufgenommen hat. Nach Verlassen des Regenerators 1" wird durch Hinzuführen von Wärme von außen auch das Volumenelement i auf die Temperatur $T_c$ aufwärmt. Die dem Volumenelement i zugeführte Wärme ist jetzt allerdings kleiner als beim ersten Volumenelement a. Das letzte Volumenelement n (s. T-S-Diagramm in **Fig. 5c**) tritt ebenfalls mit der Temperatur $T_h$ in den Regenerator 1" ein, verlässt diesen aber mit der Temperatur $T_c$, da der ursprüngliche Temperaturverlauf 11' sich jetzt zum Temperaturverlauf 11 verschoben hat. Das Volumenelement n kann somit keine Wärme mehr von außen aufnehmen.

Die während der Zustandsänderung IV'→IV den Volumenelementen a, i ,n zugeführten Wärmen können im T-S-Diagramm als Flächen unter der Kurve dargestellt werden.

Die vom Volumenelement i (mit der Masse $\Delta m_i$) beim Austritt aus dem Regenerator 1" aufgenommene Wärme $Q_{i,IV'-IV}$ lässt sich wie folgt berechnen:

$$Q_{i,IV'-IV} = \Delta m_i c_{v,i}\left[T_c - \left(T_c - \Delta T_{c,i}\right)\right] = \Delta m_i c_{v,i}\Delta T_{c,i},$$

wobei $c_{v,i}$ die spezifische Wärmekapazität des Arbeitsfluids bei konstantem Volumen ist. Die insgesamt vom Arbeitsfluid (mit der Gesamtmasse $M$) aufgenommene Wärme $Q_{IV'-IV}$ (entspricht der Wärme 9' in Fig. 4) ergibt sich dann zu

$$Q_{IV'-IV} = \sum_i \Delta m_i c_{v,i}\Delta T_{c,i} = \Delta m c_v \sum_i \Delta T_{c,i} = \Delta m c_v n \Delta T_c' = M c_v \Delta T_c',$$

wobei $\Delta T_c'$ der Mittelwert der Temperaturänderungen $\Delta T_{c,i}$ ist und $\Delta m_i = \Delta m$ für alle i.

Der sich anschließende Prozessschritt IV→V (isotherme Expansion) ist für alle Volumenelemente a, i, n gleich. Die dem Arbeitsfluid somit bei der Temperatur $T_c$ insgesamt zugeführte Wärme beträgt:

$$Q_{IV-V} = M T_c \left(s_V - s_{IV}\right),$$

wobei $s_{IV}$ und $s_V$ die spezifischen Entropien des Arbeitsfluids im Zustand IV und V sind.

Beim anschließenden Hinüberschieben in den Kompressionsraum 5 wärmt sich das Volumenelement n von der Temperatur $T_c$ auf die Temperatur $T_h$ auf (VI → I in Fig. 5c). Wegen der Temperaturänderung des magnetokalorischen Materials wird das Volumenelement n noch weiter erwärmt und tritt schließlich mit $T_h+\Delta T_{h,n}$ aus dem Regenerator 1" aus (Zustand I'). Anschließend gibt das Volumenelement n (bei konstantem Volumen) nach außen Wärme ab, so dass es sich wieder auf die Temperatur $T_n$ abkühlt (Zustand I). Ein anderes, beliebiges innere Volumenelement i tritt auch mit der Temperatur $T_c$ in den Regenerator 1" ein, verlässt diesen aber mit der Temperatur $T_h+\Delta T_{h,i}$, die tiefer ist als die Austrittstemperatur des letzten Volumenelements n, da der Regenerator 1" an das Volumenelement a und die Volumenelemente i vorher bereits Wärme abgegeben hat (Fig. 5b). Nach Verlassen des Regenerators 1" wird durch Wärmeabgabe nach außen auch das Volumenelement i auf die Temperatur $T_h$ gekühlt. Die vom Volumenelement i abgegebene Wärme ist jetzt allerdings kleiner als beim letzten Volumenelement n. Das erste Volumenelement a schließlich tritt ebenfalls mit der Temperatur $T_c$ in den Regenerator 1" ein und verlässt diesen mit der Temperatur $T_h$ (Fig. 5a), da der ursprüngliche Temperaturverlauf 11" sich jetzt zum Temperaturverlauf 11 verschoben hat. Das erste Volumenelement a kann somit keine Wärme mehr nach außen abgeben. Die während der Zustandsänderung I'→I von den Volumenelementen abgeführten Wärmen können im T-S-Diagramm wiederum als Flächen unter der Kurve dargestellt werden.

Die vom Volumenelement i (mit der Masse $\Delta m_i$) beim Austritt aus dem Regenerator 1" abgegebene (und somit gemäß der in der Thermodynamik üblichen Konvention negative) Wärme $Q_{i,I'-1}$ lässt sich dann wie folgt berechnen:

$$Q_{i,I'-I} = \Delta m_i c_{v,i}\left[T_h - \left(T_{ch} + \Delta T_{h,i}\right)\right] = -\Delta m_i c_{v,i}\Delta T_{h,i},$$

Die insgesamt vom Arbeitsfluid (mit der Gesamtmasse $M$) abgegebene Wärme $Q_{I'-I}$ (entspricht der Wärme 8' in Fig. 4) ergibt sich zu:

$$Q_{I'-I} = -\sum_i \Delta m_i c_{v,i} \Delta T_{h,i} = -\Delta m c_v \sum_i \Delta T_{h,i} = -\Delta m c_v n \Delta T_h' = -M c_v \Delta T_h',$$

wobei $\Delta T_{h'}$ der Mittelwert der Temperaturänderungen $\Delta T_{h,i}$ ist und $\Delta m_i = \Delta m$ für alle i.

Der sich anschließende Prozessschritt I→II (isotherme Kompression) ist für alle Volumenelemente a, i ,n gleich. Die vom Arbeitsfluid somit bei der Temperatur $T_h$ insgesamt abgegebene Wärme beträgt:

$$Q_{I-II} = -M T_h (s_I - s_{II}),$$

wobei $s_I$ und $s_{II}$ die spezifischen Entropien des Arbeitsfluids im Zustand I und II sind.

Da für den (hier angenommenen) Fall des idealen Arbeitsfluids die Isochoren (V=konst) im T-S-Diagramm äquidistante Linien sind, sind die Entropieänderungen während der Zustandsänderungen I→II und IV→V betragsmäßig gleich:

$$s_I - s_{II} = s_V - s_{IV} = \Delta s.$$

Beim Durchströmen des Regenerators 1" wird nach außen keine Wärme übertragen, so dass im Gesamtprozess dem Arbeitsfluid die folgende gesamte Wärmemenge zugeführt wird:

$$Q_{zu} = M \left[ T_c \Delta s + c_v \Delta T_c' \right]$$

und vom Arbeitsfluid die folgende gesamte Wärmemenge abgeführt wird:

$$Q_{ab} = -M \left[ T_h \Delta s + c_v \Delta T_h' \right].$$

Gemäß dem ersten Hauptsatz der Thermodynamik gilt für einen Kreisprozess mit der Arbeit W:

$$W + (Q_{zu} + Q_{ab}) = 0,$$

so dass sich die Arbeit (mit $\Delta T = T_h - T_c$) wie folgt berechnet:

$$W = -\left( M \left[ T_c \Delta s + c_v \Delta T_c' \right] - M \left[ T_h \Delta s + c_v \Delta T_h' \right] \right) = M \left( \Delta T \Delta s + c_v \left( \Delta T_h' - \Delta T_c' \right) \right)$$

Die bei einem "reinen" Stirling-Kälteprozess bei der Temperatur $T_c$ zugeführte Wärme ergibt sich zu:

$$Q_{zu,Stir.} = M T_c \Delta s,$$

so dass sich die Erhöhung der Kälteleistung wie folgt berechnen lässt:

$$\frac{Q_{zu}}{Q_{zu,Stir.}} = 1 + \frac{c_v \Delta T_c{}'}{T_c \Delta s} \, .$$

Im Gegensatz zum "reinen" idealen Stirling-Kälteprozess beinhaltet selbst der ideale Hybrid-Prozess allerdings Irreversibilitäten, die sich - wie in der Thermodynamik üblich -über Exergierverluste fassen lassen. In Folgenden entspreche die Temperatur $T_h$ der Temperatur der Umgebung. Dann ändert sich durch Wärmezufuhr während der Prozessphase IV'→IV die Exergie des Arbeitsfluids wie folgt:

$$E_{IV'-IV} = Q_{IV'-IV} - M\,T_h\left(s_{IV} - s_{IV'}\right) = Q_{IV'-IV} - M\,T_h c_v \ln\left(\frac{T_c}{T_c - \Delta T_c{}'}\right)$$

$$= M c_v\left(\Delta T_c{}' - T_h \ln\left(\frac{T_c}{T_c - \Delta T_c{}'}\right)\right).$$

Während der Prozessphase IV→V (VI) tritt die folgende Exergieänderung auf:

$$E_{IV-V} = Q_{IV-V} - M\,T_h\,\Delta s = -M\,\Delta s\,\Delta T \, .$$

Durch Wärmeabfuhr während der Prozessphase I'→I ändert sich die Exergie des Arbeitsfluids wie folgt:

$$E_{I'-I} = Q_{I'-I} - M\,T_h\left(s_I - s_{I'}\right) = Q_{I'-I} - M\,T_h c_v \ln\left(\frac{T_h}{T_h + \Delta T_h{}'}\right)$$

$$= M c_v\left(-\Delta T_h{}' - T_h \ln\left(\frac{T_h}{T_h + \Delta T_h{}'}\right)\right)$$

.

Da die Wärmeabfuhr während der Phase I→II (III) bei Umgebungstemperatur ($T_h$) stattfindet, tritt keine Exergieänderung auf.
Jetzt ist es möglich, eine Gesamt-Exergiebilanz aufzustellen:

$$E_{VI'-VI} + E_{IV-V} + E_{VI-I} + E_{I'-I} + E_{I-II} + E_{III-IV} + E_{ver} + W = 0$$

Da sich die Exergieänderungen des Arbeitsfluids bei Durchströmen des Regenerators 1" (in beiden Richtungen) aufheben (d.h. $E_{VI-I} + E_{III-IV} = 0$), lassen sich die auf die Arbeit bezogenen Exergieverluste $E_{ver}$ nach Einsetzen und mit Vereinfachungen wie folgt berechnen:

$$\frac{E_{ver}}{W} = \frac{c_v T_h\left(\ln\left(\frac{T_c}{T_c - \Delta T_c{}'}\right) + \ln\left(\frac{T_h}{T_h + \Delta T_h{}'}\right)\right)}{\Delta T \Delta s + c_v\left(\Delta T_h{}' - \Delta T_c{}'\right)} \, .$$

Es resultiert der folgende exergetische Wirkungsgrad oder Gütegrad *v* (der eine Aussage über die "Güte" des

Prozesses erlaubt):

$$\nu = 1 - \frac{E_{ver}}{W}$$

Wie in der Druckschrift "Prospects of magnetic liquefaction of hydrogen" (Barclay, J.A, Le froid sans frontières, vol. 1, S. 297, 1991) abgeleitet, gilt bei einer magnetischen Kältemaschine der folgende Zusammenhang, der auch für die erfindungsgemäße Hybrid-Maschine gültig ist:

$$\frac{T_h}{T_c} = \frac{\Delta T_h}{\Delta T_c} \approx \frac{\Delta T_h{}'}{\Delta T_c{}'} ,$$

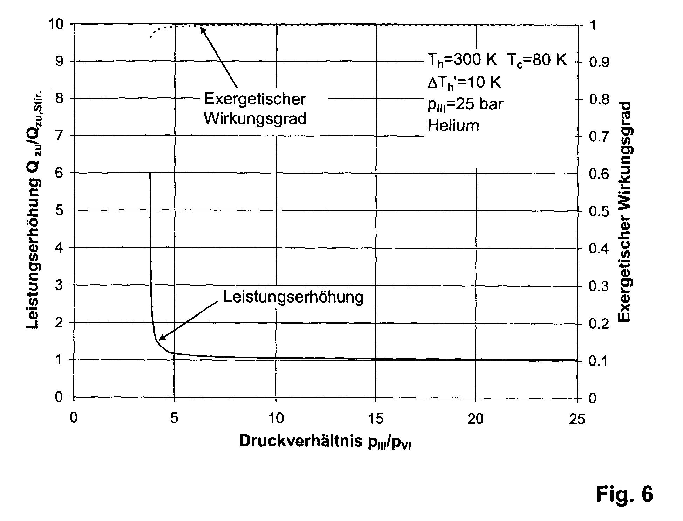

so dass sich ein Beispiel berechnen lässt. In **Fig. 6** sind bei den dort angegebenen Randwerten die (Kälte-) Leistungserhöhung und der exergetische Wirkungsgrad einer Hybrid-Stirling-Kältemaschine im Vergleich zu einer "reinen" Stirling-Kältemaschine dargestellt. Für beide Maschinen sind dabei die in der Wirklichkeit auftretenden Irreversibilitäten nicht berücksichtigt ("ideale" Maschinen). Man erkennt, dass sich vor allem bei kleinen Druckverhältnissen die Leistung erheblich steigern lässt, ohne dass der Prozess merklich an Güte verliert. Für kleine Druckverhältnisse rücken die beiden Isochoren (s. z.B. Fig. 5b) enger zusammen, so dass die Fläche $Q_{i,IV-V}$ im Vergleich zur Fläche $Q_{i,IV'\ IV}$ kleiner wird. Dennoch hält sich der Exergieverlust in Grenzen, da die Temperaturänderungen $\Delta T_h$, $\Delta T_c$ im Vergleich zu den absoluten Temperaturen $T_h$, $T_c$ immer noch klein bleiben. Kleine Druckverhältnisse in einer Maschine sind immer ein Vorteil, da somit die Wechselbelastungen kleiner werden und die Lebensdauer der Maschine sich erhöht. Eine erfindungsgemäße Hybrid-Maschine ist daher auch aus diesem Grund einer "reinen" Gas-Kältemaschine überlegen.

Insgesamt ergibt sich eine kompakte, vom apparativen Aufwand einfache Vorrichtung zum Transport von Wärme von einem kalten Reservoir zu einem warmen Reservoir, in welcher mindestens zwei zyklische Prozesse zum Wärmetransport unter Arbeitsaufnahme ablaufen, wovon mindestens einer ein regenerativer zyklischer Prozess und mindestens einer ein magnetokalorischer zyklischer Prozess ist. Die Vorrichtung weist eine hohe Leistungsdichte (vor allem bei kleinen Druckverhältnissen) und Effizienz auf und lässt sich vorzugsweise zur Kühlung einer supraleitenden Magnetanordnung einsetzten, da dort ein sowieso vorhandenes Streumagnetfeld für den magnetokalorischen Kreislauf genutzt werden kann.

**Bezugszeichenliste**

1        Passiver Regenerator (Wärmespeichermedium)

1'       Aktiver Regenerator (magnetokalorisches Material)

1"       Passiver und aktiver Regenerator der erfindungsgemäßen Vorrichtung (magnetokalorisches Material)

2        Warmes Ende des Regenerators

2'       Kaltes Ende des Regenerators

3        Warmer Wärmeübertrager

3'       Kalter Wärmeübertrager

4        Warmer Kolben

4'       Kalter Kolben

5        Kompressionsraum

| 5'  | Expansionsraum |
|-----|----------------|
| 6   | Warmer Antriebsmechanismus |
| 6'  | Kalter Antriebsmechanismus |
| 7   | Magnet (Permanentmagnet, Magnetspule) |
| 8   | Abgegebene Wärme im regenerativen Gaskreislauf |
| 8'  | Abgegebene Wärme im magnetokalorischen Kreislauf |
| 9   | Aufgenommene Wärme im regenerativen Gaskreislauf |
| 9'  | Aufgenommene Wärme im magnetokalorischen Kreislauf |
| 10  | Temperaturprofil im passiven Regenerator |
| 11  | Temperaturverlauf im aktiven Regenerator vor der Entmagnetisierung |
| 11' | Temperaturverlauf im aktiven Regenerator nach der Entmagnetisierung |
| 11" | Temperaturverlauf im aktiven Regenerator nach der Magnetisierung |
| 12  | Erste Magnetspule |
| 13  | Flüssiges Helium |
| 14  | Heliumbehälter |
| 15  | Aufhängerohr(e) |
| 16  | Außenmantel |
| 17  | Halsrohr |
| 18  | Warmes Ende des Halsrohrs |
| 19  | Kaltes Ende des Halsrohrs |
| 20  | Zweistufiger Kaltkopf |
| 21  | Strahlungsschild |
| 22  | Erste Kältestufe des Kaltkopfes |
| 23  | Wärmeleitende feste Verbindung |
| 24  | Zweite Kältestufe des Kaltkopfes |
| 25  | Regeneratorrohr der zweiten Kältestufe |
| 26  | Zweite Magnetspule |
| a   | Erstes Volumenelement |
| i   | Beliebiges inneres Volumenelement |

n    Letztes Volumenelement

**Patentansprüche**

1.  Vorrichtung zum Transport von Wärme von einem kalten Reservoir zu einem warmen Reservoir, in welcher mindestens zwei zyklische Prozesse zum Wärmetransport unter Arbeitsaufnahme ablaufen, wovon mindestens einer ein regenerativer zyklischer Prozess und mindestens einer ein magnetokalorischer zyklischer Prozess ist, wobei für den regenerativen zyklischen Prozess ein Arbeitsfluid und ein Wärmespeichermedium vorgesehen sind, **dadurch gekennzeichnet,** **dass** das Wärmespeichermedium des regenerativen zyklischen Prozesses ein magnetokalorisches Material für den magnetokalorischen zyklischen Prozess umfasst, wobei sich das magnetokalorische Material in einem Regeneratorbereich (1, 1', 1 ") mit einem kalten Ende (2') und mit einem warmen Ende (2) befindet, und dass das Arbeitsfluid des regenerativen zyklischen Prozesses zusätzlich als Wärmeträgermedium für den magnetokalorischen zyklischen Prozess dient.

2.  Vorrichtung nach Anspruch 1, **dadurch gekennzeichnet, dass** das kalte Reservoir eine Temperatur unter der Umgebungstemperatur und das warme Reservoir eine Temperatur aufweist, die gleich oder größer als die Umgebungstemperatur ist.

3.  Vorrichtung nach einem der vorhergehenden Ansprüche, **dadurch gekennzeichnet, dass** der regenerative zyklische Prozess auf einem Stirling-, einem Vuilleumier- oder einem Gifford-Mc-Mahon- oder einem Pulsrohr-Gaskreislauf beruht.

4.  Vorrichtung nach Anspruch 1, **dadurch gekennzeichnet, dass** das magnetokalorische Material verschiedene Komponenten mit unterschiedlicher Curie-Temperatur umfasst, die schichtweise in Reihenfolge abfallender Curie-Temperatur im Regeneratorbereich (1, 1', 1") nebeneinander angeordnet sind, so dass die Komponente des magnetokalorischen Materials mit der höchsten Curie-Temperatur am warmen Ende (2) und die Komponente des magnetokalorischen Materials mit der tiefsten Curie-Temperatur am kalte Ende (2') des Regeneratorbereichs zu liegen kommen.

5.  Vorrichtung nach einem der vorhergehenden Ansprüche, **dadurch gekennzeichnet, dass** eine Einrichtung zum Bereitstellen eines Magnetfeldes und/oder Ausblenden eines Hintergrund-Magnetfeldes vorgesehen ist, welche zumindest am Ort des magnetokalorischen Materials ein Magnetfeld bereitstellt und/oder ausblendet.

6.  Vorrichtung nach Anspruch 5, **dadurch gekennzeichnet, dass** die Einrichtung zum Bereitstellen eines Magnetfeldes und/oder Ausblenden eines Hintergrund-Magnetfeldes einen Permanentmagneten umfasst.

7.  Vorrichtung nach einem der Ansprüche 5 oder 6, **dadurch gekennzeichnet, dass** die Einrichtung zum Bereitstellen eines Magnetfeldes und/oder Ausblenden eines Hintergrund-Magnetfeldes eine Magnetspulenwicklung (7, 26) mit einem normalleitenden und/oder einem supraleitenden Draht umfasst.

8.  Vorrichtung nach Anspruch 5, **dadurch gekennzeichnet, dass** als Einrichtung zum Ausblenden eines Hintergrund-Magnetfeldes eine Magnetfeldabschirmung aus weichmagnetischem Material vorgesehen ist.

9.  Supraleitende Magnetanordnung mit einer Vorrichtung zum Transport von Wärme von einem kalten Reservoir zu einem warmen Reservoir nach einem der vorhergehenden Ansprüche.

10. Verfahren zum Transport von Wärme von einem kalten Reservoir zu einem warmen Reservoir, wobei mindestens zwei zyklische Prozesse zum Wärmetransport unter Arbeitsaufnahme ablaufen, wovon mindestens einer ein regenerativer zyklischer Prozess ist, bei dem der Wärmetransport über ein Arbeitsfluid erfolgt, und mindestens einer ein magnetokalorischer zyklischer Prozess ist, bei dem ein Wärmeaustausch über ein magnetokalorisches Material erfolgt, **dadurch gekennzeichnet,** **dass** das magnetokalorische Material auch als Wärmespeichermedium im regenerativen zyklischen Prozess und das Arbeitsfluid auch als Wärmeträgermedium für den magnetokalorischen zyklischen Prozess verwendet wird.

11. Verfahren nach Anspruch 10, **dadurch gekennzeichnet, dass** zumindest am Ort des magnetokalorischen Materials periodisch die Feldstärke eines Magnetfeldes variiert wird.

12. Verfahren nach einem der Ansprüche 10 oder 11, **dadurch gekennzeichnet, dass** im regenerativen zyklischen Prozess die Phase der Wärmeaufnahme und die Kompressionsphase bei hohem magnetischem Feld im magnetokalorischen Material, die Phase der Wärmeabgabe und die Expansionsphase bei niedrigem magnetischem Feld im magnetokalorischen Material erfolgen.

Stand der Technik      **Fig. 1a**

Stand der Technik      **Fig. 1b**

**Fig. 1c**

Stand der Technik     **Fig. 2a**

Stand der Technik      **Fig. 2b**

Fig. 2c

**Fig. 3**

**Fig. 4**

Fig. 5a

Fig. 5b

Fig. 5c

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20020002830 A1

**In der Beschreibung aufgeführte Nicht-Patentliteratur**

• **P.J. SHIRRON.** A multi-stage continuousduty adiabatic demagnetization refrigerator. *Adv. Cry. Eng.,* vol. 45B, 1629
• **S.F. KRAL.** Performance testing of a 4 K active magnetic regenerative refrigerator. *Adv. Cry. Eng.,* vol. 45A, 329

• **BARCLAY, J.A.** Prospects of magnetic liquefaction of hydrogen. *Le froid sans frontières,* 1991, vol. 1, 297